Europäisches Patentamt

European Patent Office

Office européen des brevets

(19)

(11) Publication number: **0 387 386**
**A1**

## (12) EUROPEAN PATENT APPLICATION

(21) Application number: **89104812.6**

(22) Date of filing: **17.03.89**

(51) Int. Cl.⁵: **B67D 5/01, G01F 11/28**

(43) Date of publication of application:
**19.09.90 Bulletin 90/38**

(84) Designated Contracting States:
**DE FR GB NL SE**

(71) Applicant: **Thompson, W. Bruce**
**5326 No. 7 Highway**
**Woodbridge Ont. L4A, 7Z9(CA)**

Applicant: **Thompson, Randall Bruce**
**Box 823,**
**Stouffville Ont. L4A, 7Z9(CA)**

(72) Inventor: **Thompson, W. Bruce**
**5326 No. 7 Highway**
**Woodbridge Ont. L4A, 7Z9(CA)**
Inventor: **Thompson, Randall Bruce**
**Box 823,**
**Stouffville Ont. L4A, 7Z9(CA)**

(74) Representative: **Pfenning, Meinig & Partner**
**Mozartstrasse 17**
**D-8000 München 2(DE)**

(54) **Dispensing of bulk fluids.**

(57) A dispensing apparatus (14) and method for bulk fluids is disclosed using a bulk storage tank (16) operating with a second tank (30) of a smaller size which retains fluid to be dispensed. Separate pump means (40,56) are employed for feeding liquid from the bulk tank (16) to the smaller reservoir (30), and from the reservoir through a nozzle (22) to a receptacle, on demand. The system dispenses fluids such as windshield washer at e.g., service stations, without the problems associated with using separate containers by the motorist.

FIG. 2

EP 0 387 386 A1

## Dispensing of Bulk Fluids

This invention relates to the dispensing of bulk fluids.

One aspect relates to an apparatus for dispensing predetermined quantities of fluids from a bulk source thereof; another aspect relates to a method of dispensing such predetermined quantities of fluid.

The prior art teaches various types of equipment and methods for the dispensing bulk fluid. Normally, the prior art is directed to dispensing of metered quantities of liquids (as opposed to determined amounts). For example, gasoline is generally dispensed from a bulk source to an automobile via a gas pump metering and dispensing device, to correctly charge for the amount of gasoline dispensed. Such equipment requires complicated precise metering pumps.

Arrangements shown in the prior art for dispensing non-metered but predetermined or fixed quantities of liquids from a bulk source are shown in e.g., U.S.P. 598,035 illustrating a dual reservoir system for filling bottles with a liquid; the dual reservoirs empty into a single discharge system. This reference also discloses a single reservoir arrangement (Figure 2). Metering of fluid is achieved by a plunger regulating the size of the volume in a chamber while fluid from a bulk source is admitted via a valve at the bottom of the device. Fluid is fed by gravity with the desired amount being regulated by a float valve.

Although various bulk fluids have been dispensed directly and indirectly from a bulk source for gasoline, it is essential to accurately and correctly meter the amounts. Such devices use expensive complicated metering valves which for many other applications are not required or useable. For certain fluids, it is more appropriate to dispense predetermined amounts.

Dispensing of bulk liquids as opposed to the sale of such liquids in individual containers, has several advantages. First, transportation and handling costs are greatly reduced by dispensing bulk liquids directly at their point of use (as opposed to packaging and retailing smaller quantities). For example, windshield washer fluid is normally sold in four litre containers which the user must fill the vehicle reservoir from. The disadvantage of spillage/wastage of the fluid is encountered.

The present invention has particular application for dispensing of windshield fluid although other liquids in a similar category can also be advantageously dispensed.

A liquid dispensing apparatus or system of the present invention for dispensing a determined amount of a fluid eg., windshield washer fluid, from a bulk source thereof, comprises in overall form, a bulk tank for holding a bulk liquid, a smaller reservoir adapted to retain a predetermined quantity of said liquid, and in one embodiment, the reservoir having pump means therein adapted to dispense a determined quantity of liquid through said pump means, a dispensing outlet operatively associated with said reservoir for dispensing the determined quantity of liquid, inlet means operatively associated with said reservoir for receiving a supply of said liquid from said bulk tank, and pump means associated with bulk tank for feeding said supply of liquid to said reservoir from said bulk tank, and control means within said reservoir for actuating said pump means associated with said bulk tank for filling said reservoir when said reservoir is empty and for disengaging said pump means associated with said bulk tank when said reservoir is filled to a predetermined level.

A preferred apparatus uses a dispensing outlet with a nozzle for dispensing liquid into, eg., a vehicle receptacle for windshield fluid; such nozzle may include on/off means to stop the flow of fluid from said reservoir; it can include means for actuating the pump of the reservoir where the reservoir pump and the pump means of the bulk tank, are actuated separately.

A further aspect of this invention provides a method of dispensing bulk fluids, eg, windshield washer from a bulk source thereof into, eg, a vehicle windshield reservoir by the steps of (a) providing a bulk source of a fluid such as windshield washer fluid, (b) providing a smaller reservoir for retaining a predetermined quantity of fluid to be dispensed on demand, (c) filling said reservoir with fluid from said bulk source, (d) controlling the volume of fluid fed to said reservoir to a predetermined quantity, by detecting at a fixed point in said reservoir the level of fluid therein to thereby cause the cessation of step (c), (e) dispensing, on demand, a determined quantity of fluid from said reservoir, (f) indicating the termination of the dispensing of the fluid of step (e), and (g) generating a signal to repeat step (c) after step (e) has been completed. Termination of the dispensing of the fluid can be when the fluid falls in a preset lower level, or at some intermediate level.

The present invention is particularly useful for dispensing bulk fluid at gas stations used by motorists. Thus, gas stations can provide a storage facility for the bulk fluid, in eg. 200 litre drums and correct dispensing of fluids can be achieved without the problems associated with small containers (spilling/wasting can be totally eliminated).

The apparatus can be, for a self-serve operation, eg., a 200 litre drum contained within a housing, which may also contain the smaller reservoir and associated components; a dispensing nozzle can be provided in communication with the reservoir to permit a service station attendant, or individual motorist, to dispense the determined quantity of fluid. Since the present invention does not involve an expensive metering system, the construction of such an installation will be economical.

Two separate pump means are employed - a first pump to provide liquid from the bulk source to the reservoir, and a second pump, operating independently of the first pump, for providing a flow of liquid from the reservoir to eg., a vehicle's windshield reservoir. Any suitable pump, preferably electrically driven, can be used, eg., gear or submersible pumps, etc. Preferably the pump is located internally of the reservoir, and the reservoir partially or totally mounted within the bulk source tank. Pump means for feeding liquid from the bulk source to the smaller reservoir can be any conventional type mounted internally or externally of the bulk tank.

The use of two separate pump means eliminates metering devices; each of the pump means functions for a different purpose and although both pump means operate in a desired sequence, such pump means do not operate together thus avoiding accidental discharge of fluid while providing only the desired determined quantity of fluid.

The small reservoir can be a closed container of suitable size; when used for dispensing windshield fluid, it may have a volume of eg., four litres but utilizing the control system of the present invention, it can also be adapted to dispense predetermined amounts in fixed volumes of eg., two litres or more. Since the fluid is dispensed under pump pressure from the small reservoir, the reservoir can be mounted at any desired downstream location from the bulk fluid source. When the smaller reservoir is mounted within the larger bulk source, is should be totally sealed apart from a vent to prevent leakage into the smaller reservoir.

Preferably control means are used to control sequential operation of the pumps which is effective to discontinue fluid feeding of reservoir fluid when the reservoir is empty, and to sequentially activate the bulk storage pump means to re-fill the reservoir. Preferred controls are at least first and second detecting means within the reservoir, which may be mounted at spaced-apart fixed points in the reservoir to detect first and second fluid levels.

The detecting means to actuate the pumps can be liquid submersible magnetic detecting switches. The upper detecting means may also generate a signal to a master control for initiating a "fill" sequence to dispense a predetermined quantity of liquid from the small reservoir to a vehicle's reservoir. Alternately, appropriate means connected to a nozzle or on/off valve therefor could be used to actuate the small reservoir pump - ie, to generate a signal to actuate the pump means when the user is ready to dispense the predetermined quantity on demand. Likewise the detector switch for the bulk storage pump may generate a signal to actuate the pump. A master control can sequence the termination of fluid feeding by the reservoir pump and start-up of the bulk system pump a timed-cycle or control means may be provided to required resetting of the cycle before the pump means of the bulk system is actuated to re-fill the reservoir. Such control means, can be provided by conventional relay and timing circuits.

When, as in one embodiment of the invention, the customer dispenses only a portion of the volume in the reservoir, means are provided, such as a manual push-button or means actuated by replacement of a nozzle, for causing the pump associated with the bulk system to fill the reservoir.

While the description refers to dispensing bulk windshield washer fluid, other bulk fluids such as eg., kerosene, soap or swimming pool solutions or the like can be used.

All of the control means, apart from the detecting means, can be provided by suitable relay and timing circuits; again, those skilled in that art can appropriately select such relays and circuitry for that purpose.

IN THE DRAWINGS:

Figure 1 is a perspective schematic view of a typical service station "island" with the apparatus of the present invention;

Figure 2 is a vertical section taken through the apparatus of Figure 1;

Figure 3 is an enlarged view of a reservoir used in the present invention.

Figure 4 is a front view of the upper housing of the apparatus as shown in Figure 2, illustrating a modification thereof;

Figure 5 is a similar view in that of Figure 4 illustrating a further modification; and

Figure 6 is an enlarged view of part of the front face of the apparatus as shown in Figure 5.

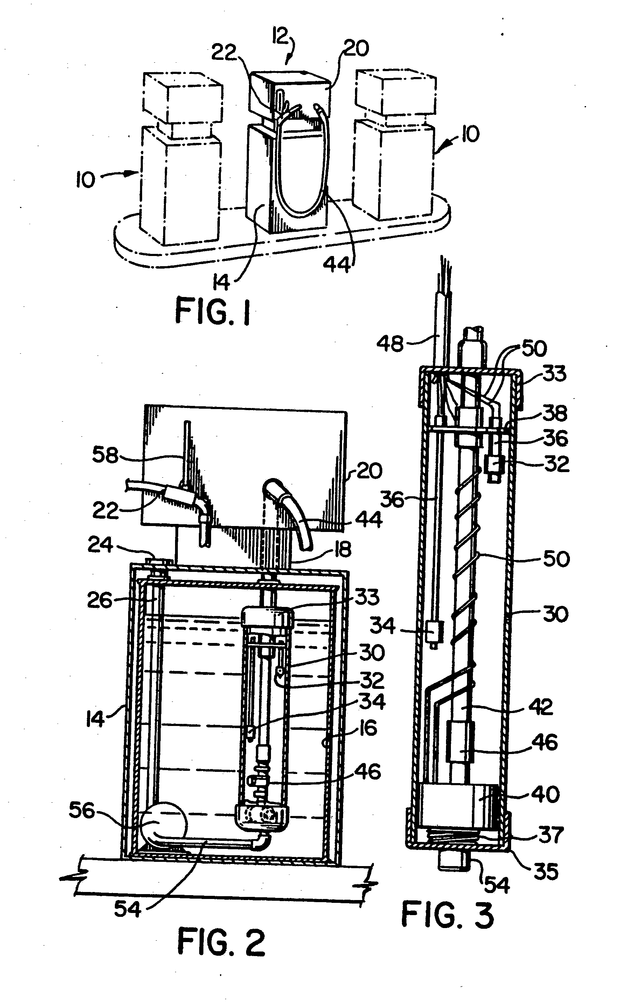

In Figs. 1 and 2, a typical service station "island" is illustrated, with gas pumps 10; an apparatus of this invention includes housing 14 to retaining bulk fluid in eg., a 200 litre drum 16. Housing 14 communicates via intermediate housing 18 to upper housing 20 having a source of power (eg., a battery) together with appropriate known control circuitry desired. Housing 20 also serves to mount a dispensing nozzle 22.

Bulk storage tank 16 includes an opening, with a cap 24 in communication the tank through conduit 26, to re-fill it as desired.

Within the bulk storage tank is a small reservoir 30 of one to several litres. Reservoir 30 has with a at least two magnetic contact switches 32 and 34, suspended at a predetermined distance from each other by mounting rod 36 joined by a support 38 to reservoir 30. Switches 32 and 34 determine the on/off cycle of the pump means. By using more than two switches 32,34 different fluid levels may be chosen for dispensing (by using a conventional selector switch-not shown) for actuation of a desired contact switch which may be manually chosen by a customer or by the amount of coins inserted into a coin mechanism. Reservoir 30 is provided with pump 40, is located within the reservoir. Pump 40, when activated, is effective to withdraw liquid from reservoir 30 and dispense the same through conduit 42, and flexible hose 44 with nozzle 22. Check valve 46 may be provided in conduit 42 to prevent back-flow of fluid into the reservoir.

Reservoir 30 is provided with cover 33, through which conduit 42 passes; a further aperture in the cover 33 may be provided for conduit 48 carrying electrical control panels eg., wires 50 connected to appropriate relays of a power source for activation of the motor/switches.

If desired, spring 37 may be provided between the bottom 35 of reservoir 30 and pump motor 40 to dampen any vibrations.

Reservoir 30 communicates with reservoir 16 through conduit 54, which feeds bulk fluid reservoir 30 via internal pump 56.

By varying the heights of adjustable switches 32 and 34, the volume of fluid can be selected as desired; use of switches 32 and 34 will always dispense a predetermined quantity corresponding to the difference in the mounting of the two switches. In operation, nozzle 22 is used for filling the windshield washer reservoir of an automobile; it may have on/off valve means (not shown) and may be mounted on a hook-shaped lever 58. Lever 58 may be connected to conventional switch means located in the upper housing 20 whereby upon removal of the nozzle 22 from the lever 56, the switch means are actuated to activate pump 40. Upon the on/off valve means being actuated, pump 40 will then commence pumping windshield washer fluid from the reservoir 30 through conduit 42, hose 44 and nozzle 22. An overriding relay of conventional design may be employed to permit pump 40 to be actuated, operated in conjunction with switch 32 which signals to a control system that there is fluid in reservoir 30. Switch 34 may be operated with a conventional relay so that pump 40 dispenses a predetermined quantity (that level between the switch 32 and the switch 34); switch 34 is also effective to terminate the pumping operation of pump 40 and at the same time, signal to the control system the activation of pump 56 only after is hung up, so as to commence re-filling of reservoir 30. Filling is continued until the level of the liquid in the reservoir 30 makes contact with the switch 32, which is then effective through a conventional relay or the like to terminate the pumping operation of pump 56.

A modification of the above apparatus includes coin-operated dispensing means where, eg., a conventional coin receiving mechanism may be employed in conjunction with an overall control means to activate the on/off valve means of the nozzle 22, or at some other appropriate point in the system, so that the operation can be carried out on a self-serve basis.

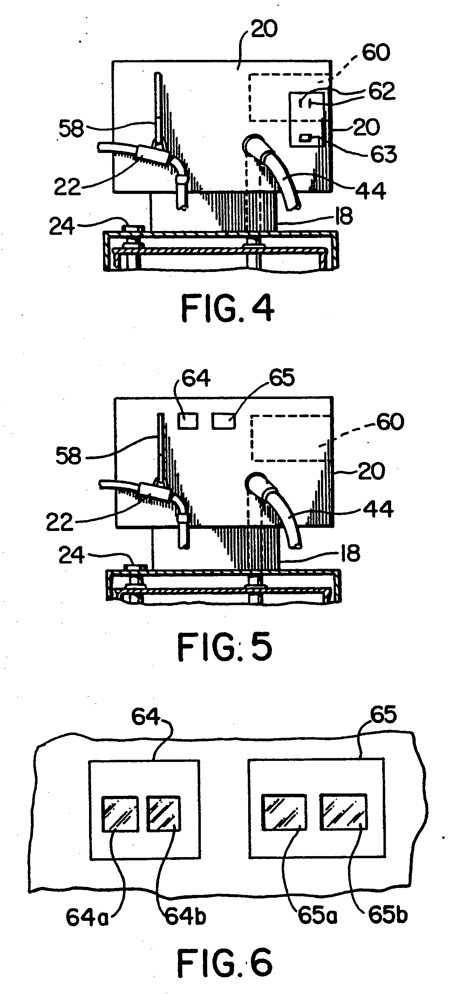

This modification is illustrated in Figure 4. A control system in the upper housing 20 is indicated in dotted outline at 60. Control system 60 can retain the relays and other controls previously mentioned. Associated with the control system is a coin mechanism 61. Coins can be inserted in slots 62 with a coin return indicated at 63. The coin mechanism can be of conventional form and permits operation of the dispensing apparatus, via the control system, when the necessary coins have been inserted in the coin mechanism; to dispense, a determined quantity of liquid. In operation, as described above, a liquid will dispose from the reservoir, and continues until the reservoir is empty. However, it can also be arranged that instead of a determined amount being dispensed as the whole content of the reservoir, a determined quantity of lesser volume can be dispensed.

Illustrated in Figures 5 and 6 is a further modification in which displays 64 and 65 are provided in the top housing. A flow sensor is positioned in the supply pipe line from the reservoir 30 to the hose 44, or a level sensor may be positioned in the reservoir to read/detect the level or volume therein. One possible position is indicated by dotted outline 66. Display 64 will display, for example, litres at 64a and tenths of a litre at 64b. At display 65, monetary values can be shown at 65a and 65b. With the arrangement of Figs. 5 and 6, the quantity, either by volume or by money units can be shown when the apparatus is used to dispose an amount of liquid which does not use the full amount of the reservoir. Switch 34 will then not actuate the pump 56 to refill the reservoir. A manually operated switch, eg., a push-button switch, can be provided at some convenient position on housing 20. Actuation of this switch by-passes switch 34 and pump 56 fills the reservoir. An alternative arrangement is for a switch to be actuated on replacement of the nozzle 22 on a timer 58.

It can also be arranged that a coin mechanism 61, (Fig. 4) can be one that will accept varying total values of coins, starting-off the dispensing of liquid once a defined or selected value has been reached.

## Claims

1. A liquid dispensing apparatus (14) for dispensing a determined amount of a fluid from a bulk source (16) thereof, comprising a bulk tank (16) suitable for holding a bulk liquid, a smaller reservoir (30) adapted to retain a predetermined quantity of the liquid, the reservoir (30) having pump means adapted to dispense a quantity of liquid through the pump means (40), a dispensing outlet (42) operatively associated with the reservoir for dispensing the liquid, inlet means (54) operatively associated with the reservoir (30) for receiving a supply of liquid from the bulk tank (16), pump means (56) associated with the bulk tank (16) for feeding the supply of liquid to the reservoir from the bulk tank, and control means (32,34) within the reservoir for actuating the pump means (56) associated with the bulk tank for filling the reservoir (30) when the reservoir (30) is emptied to a predetermined level and for disengaging the pump means associated with the bulk tank when the reservoir is filled to a predetermined level.

2. An apparatus is defined in Claim 1, wherein the dispensing outlet includes nozzle means (22) and which includes on/off valve means.

3. An apparatus is defined in Claim 1, wherein the reservoir (30) is mounted outside the bulk tank (16).

4. An apparatus is defined in claim 1, wherein there is provided second control means for overall control of both of the pump means (40,56), the second control means being actuatable when the nozzle means (22) is moved from a first position to a second position.

5. An apparatus is defined in claim 1, wherein the control means (32,34) within the reservoir (30) are adjustable to vary the amount of fluid in the reservoir.

6. An apparatus is defined in claim 1, wherein the control means (32,34) within the reservoir (30) comprises at least first and second spaced-apart detecting means (32,34) within the reservoir (30), the first and second detecting means being spaced a distance corresponding to a predetermined amount of fluid.

7. An apparatus as claimed in claim 1 including second control means for sequential operation of said pumps, and including coin operated means (61) for actuating said second control means.

8. An apparatus as claimed in claim 1, wherein said control means comprises at least one liquid level sensing means (32) associated with said reservoir and including an upper sensing means and at least one lower sensing means (34) for sensing a higher and a lower liquid level in said reservoir; control means (60) for actuating said pumps; said sensing means (32,34) providing signals to said control means (60) to fill said reservoir when said liquid level is said lower liquid level and to cease filling said reservoir when said liquid level is at said upper liquid level, said control,means (60) also permitting dispensing of said liquid to said dispensing outlet after filling of said reservoir.

9. An apparatus as claimed in claim 8, including a liquid quantity indicator (64) for indicating the quantity of liquid dispensed, or a liquid value indicator (65) for indicating the value of liquid dispensed.

10. An apparatus as claimed in claim 10, including a switch connected to said control means for by-passing said lower sensing means to enable said pump means to refill said reservoir, when the quantity of liquid dispensed does not lower the liquid level to said lower level.

11. A method of dispensing bulk fluids, such as a windshield washer fluid, from a bulk source thereof by the steps (a) providing a bulk source of a fluid such as windshield washer fluid; (b) providing a smaller reservoir adapted to retaining a predetermined quantity of fluid to be dispensed on demand; (c) filling the reservoir with fluid from the bulk source; (d) controlling the volume of fluid fed to the reservoir to a predetermined quantity by detecting at a fixed point in the reservoir the level of fluid therein to thereby cause the cessation of step (c); (e) dispensing, on demand, fluid from the reservoir; (f) detecting the termination of the dispensing of the fluid of step (e) by detecting the level of the fluid at a fixed point in the reservoir, the difference between the fixed points of detection in the reservoir constituting the predetermined quantity of fluid to be dispensed in step (e), and (g) generating a signal to repeat step (c) after step (e) has been completed.

12. The method of claim 11, including selecting a determined quantity of liquid by inserting one or more coins in a coin mechanism.

FIG. 1

FIG. 2

FIG. 3

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 230 978 (INSTITUT FRANCAIS DU PETROLE) * Page 5, lines 21-35; page 6, lines 26-31,22-25; figure 3 * | 1,3,6,8,9,11 | B 67 D 5/01 G 01 F 11/28 |
| Y | | 2,4,5,7,12 | |
| Y | US-A-4 442 953 (Y. MIYAMOTO et al.) * Column 2, lines 38-51; figure 1 * | 2,4 | |
| Y | US-A-3 193 141 (D.B. BADGLEY) * Column 2, line 66 - column 3, line 16; figure 1 * | 5 | |
| Y | US-A-3 550 743 (H.R. ROTHSCHILD et al.) * Column 2, lines 58-69; claim 1; figure 1 * | 7,12 | |
| A | FR-A-2 387 438 (CONSTRUCTIONS SOUDEES DU COTEAU et al.) * Page 1, lines 24-28; page 2, lines 21-40; claim 4; figure 1 * | 1,3,6,8,11 | TECHNICAL FIELDS SEARCHED (Int. Cl.5)  B 67 D G 01 F |

The present search report has been drawn up for all claims

| Place of search | Date of completion of the search | Examiner |
|---|---|---|
| THE HAGUE | 31-10-1989 | VAN DEN BOSSCHE E.J.N. |